# EUROPEAN PATENT SPECIFICATION

(11) **EP 3 828 390 B1**
(45) Date of publication and mention of the grant of the patent: **01.10.2025**
(21) Application number: 20208232.7
(22) Date of filing: 17.11.2020
(51) Int. Cl.: F01D 9/04

(54) **TURBOMACHINE NOZZLE WITH AN AIRFOIL HAVING A CURVILINEAR TRAILING EDGE**
TURBOMASCHINENLEITSCHAUFEL MIT EINEM PROFIL MIT EINER GEKRÜMMTEN HINTERKANTE
AUBE STATORIQUE DE TURBOMACHINE AVEC UNE SURFACE PORTANTE DOTÉE D'UN BORD DE FUITE CURVILIGNE

(30) Priority: 26.11.2019 US 201916695244
(43) Date of publication of application: 02.06.2021
(73) Proprietor: GE Vernova Technology GmbH, 5400 Baden (CH)
(72) Inventor: KARAKASIS, Marios, 5401 Baden (CH)
(74) Representative: Novagraaf Group

(56) References cited:
- EP-A1- 0 064 679
- EP-A1- 2 441 918
- EP-A2- 2 218 874
- WO-A1-2009/118234
- WO-A1-2016/068862
- US-A- 6 099 248
- US-A1- 2005 172 607

## Description

### FIELD

The present disclosure generally relates to turbomachines. More particularly, the present disclosure relates to stator vanes for turbomachines.

### BACKGROUND

A gas turbine engine generally includes a compressor section, a combustion section, a turbine section, and an exhaust section. The compressor section progressively increases the pressure of a working fluid entering the gas turbine engine and supplies this compressed working fluid to the combustion section. The compressed working fluid and a fuel (e.g., natural gas) mix within the combustion section and burn in a combustion chamber to generate high pressure and high temperature combustion gases. The combustion gases flow from the combustion section into the turbine section where they expand to produce work. For example, expansion of the combustion gases in the turbine section may rotate a rotor shaft connected, e.g., to a generator to produce electricity. The combustion gases then exit the gas turbine via the exhaust section.

The turbine section generally includes a plurality of stator vanes, sometimes also referred to as nozzles. Each stator vane includes an airfoil positioned within the flow of the combustion gases. The airfoil of the stator vane typically extends radially outward from an inner platform to an outer platform.

The airfoil may extend from a leading edge to a trailing edge downstream of the leading edge and may define aerodynamic surfaces therebetween, such as a pressure side surface and a suction side surface. The intersections of the aerodynamic surfaces with the inner and outer platforms may create areas of relatively high secondary losses. Some airfoils are provided with curvilinear shapes to reduce such secondary losses; however, the known curvilinear shapes may result in other inefficiencies such as inefficiencies due to increased throat spacing between vanes.

WO 2009/118234 A1 discloses an airfoil for a rotating thermal engine. It has a convex-curved trailing edge extending between an inner platform and an outer platform. The trailing edge transitions by means of radii into the outer platform and inner platform respectively. The airfoil is designed to create an angle between the trailing edge and flow lines of a working medium that deviate as little as possible from a right angle.

US 6 099 248 A refers to a diverging flow channel of an axial-flow turbine. In the flow channel vanes project from a stator towards a rotor. The vanes have curved leading and trailing edges that extend orthogonal to the stator.

Downstream from a turbine section gas turbines are provided with exhaust diffusors. Struts extend between a radial inner side and a radial outer side of the diffusor channel in order to provide structural support. Configurations of struts of an exhaust diffusor are disclosed for example in EP 2 441 918 A1, WO 2016/068862 A1 and US 2005/0172607 A1.

Accordingly, an airfoil for a stator vane that provides both reduced secondary losses at the outer platform and efficient overall aerodynamic performance would be useful.

### BRIEF DESCRIPTION

Aspects and advantages of the technology will be set forth in part in the following description, or may be obvious from the description, or may be learned through practice of the technology.

The invention refers to an airfoil for a stator vane for a turbomachine according to claim 1

The invention also refers to a turbomachine according to claim 8.

These and other features, aspects and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended figures.
FIG. 1 is a schematic view of an exemplary gas turbine engine in accordance with one or more example embodiments of the present disclosure;
FIG. 2 is a perspective view of an exemplary turbine nozzle as may incorporate one or more embodiments of the present disclosure;
FIG. 3 is a side view of a trailing edge of an airfoil of a stator vane, according to one or more example embodiments of the present disclosure;
FIG. 4 is an end view looking upstream at a stator vane, according to a first example embodiment of the present disclosure;
FIG. 5 is an end view looking upstream at a stator vane, according to a second example embodiment of the present disclosure;
FIG. 6 is an end view looking upstream at a stator vane, according to a third example embodiment of the present disclosure;
FIG. 7 is a meridional side view of a stator vane, according to one or more example embodiments of the present disclosure;
FIG. 8 is a trailing edge perspective view of the stator vane of FIG. 7;
FIG. 9 is a meridional side view of a stator vane, according to one or more example embodiments of the present disclosure;
FIG. 10 is a trailing edge perspective view of the stator vane of FIG. 9;
FIG. 11 is a meridional side view of a stator vane, according to one or more example embodiments of the present disclosure;
FIG. 12 is a trailing edge perspective view of the stator vane of FIG. 11;
FIG. 13 is a meridional side view of a stator vane, according to one or more example embodiments of the present disclosure; and
FIG. 14 is a trailing edge perspective view of the stator vane of FIG. 13.

Repeat use of reference characters in the present specification and drawings is intended to represent the same or analogous features or elements of the present technology.

### DETAILED DESCRIPTION

Reference will now be made in detail to present embodiments of the technology, one or more examples of which are illustrated in the accompanying drawings. The detailed description uses numerical and letter designations to refer to features in the drawings. Like or similar designations in the drawings and description have been used to refer to like or similar parts of the technology. As used herein, the terms "first," "second," and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows.

As used herein, terms of approximation, such as "generally," or "about" include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Each example is provided by way of explanation of the technology, not limitation of the technology. In fact, it will be apparent to those skilled in the art that modifications and variations can be made in the present technology without departing from the scope thereof. For instance, features illustrated or described as part of one embodiment may be used on another embodiment to yield a still further embodiment. Thus, it is intended that the present technology covers such modifications and variations as come within the scope of the appended claims.

Although an industrial or land-based gas turbine is shown and described herein, the present technology as shown and described herein is not limited to a land-based and/or industrial gas turbine unless otherwise specified in the claims. For example, the technology as described herein may be used in any type of turbomachine including, but not limited to, aviation gas turbines (e.g., turbofans, etc.), steam turbines, and marine gas turbines.

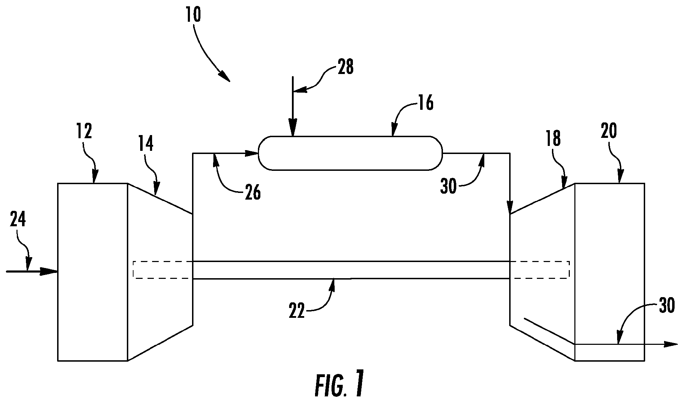

Referring now to the drawings, wherein identical numerals indicate the same elements throughout the figures, FIG. 1 schematically illustrates a gas turbine engine 10. It should be understood that the gas turbine engine 10 of the present disclosure need not be a gas turbine engine, but rather may be any suitable turbomachine, such as a steam turbine engine or other suitable engine. The gas turbine engine 10 may include an inlet section 12, a compressor section 14, a combustion section 16, a turbine section 18, and an exhaust section 20. The compressor section 14 and turbine section 18 may be coupled by a shaft 22. The shaft 22 may be a single shaft or a plurality of shaft segments coupled together to form the shaft 22.

During operation, a working fluid such as air 24 flows through the inlet section 12 and into the compressor 14 where the air 24 is progressively compressed, thus providing compressed air 26 to the combustor 16. At least a portion of the compressed air 26 is mixed with a fuel 28 within the combustor 16 and burned to produce combustion gases 30. The combustion gases 30 flow from the combustor 16 into the turbine 18, where energy (kinetic and/or thermal) is transferred from the combustion gases 30 to rotor blades, thus causing shaft 22 to rotate. The mechanical rotational energy may then be used for various purposes such as to power the compressor 14 and/or to generate electricity. The combustion gases 30 exiting the turbine 18 may then be exhausted from the gas turbine 10 via the exhaust section 20.

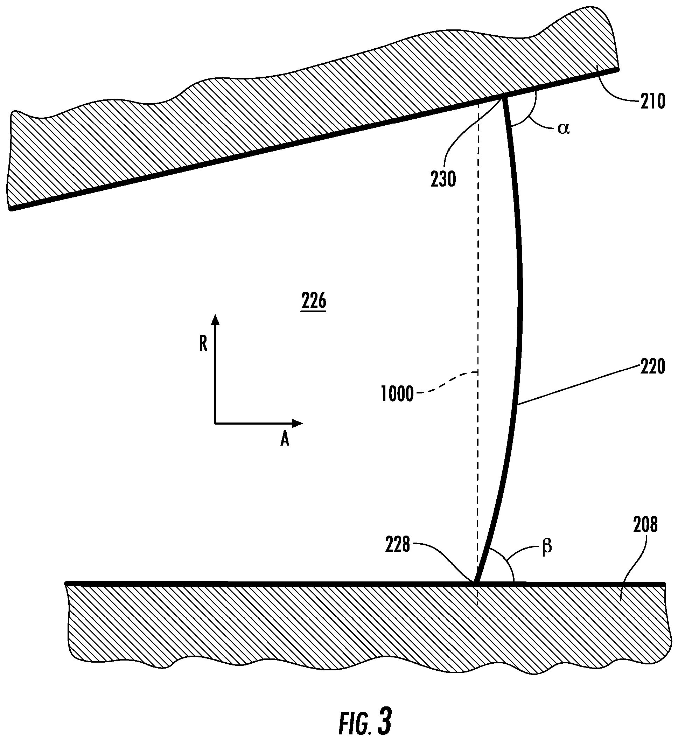

As noted in FIGS. 3-14, the gas turbine 10 may define an axial direction A, e.g., along or parallel to the shaft 22, a radial direction R perpendicular to the axial direction A, and a circumferential direction C extending concentrically around the axial direction A.

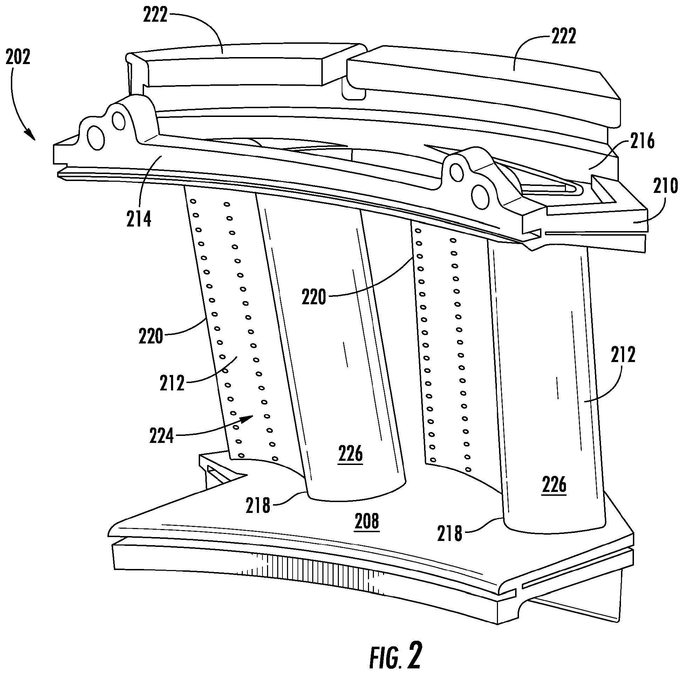

FIG. 2 provides a perspective view of an exemplary turbine nozzle 202, e.g., as may be incorporated into the turbine 18 shown in FIG. 1 in the embodiments of the present disclosure. As illustrated in FIG. 2, the turbine nozzle 202 includes an inner platform 208 and an outer platform 210 radially spaced apart from the inner platform 208, e.g., along the radial direction R. The outer platform may extend along the axial direction A between a forward sidewall 214 and an aft sidewall 216.

In the illustrated example of FIG. 2, a pair of airfoils 212 extends in span from the inner platform 208 to the outer platform 210. In this respect, the example turbine nozzle 202 illustrated in FIG. 2 is referred to in the industry as a doublet. Nevertheless, the turbine nozzle 202 may have only one airfoil 212 (i.e., a singlet), three airfoils 212 (i.e., a triplet), or more airfoils 212.

Each airfoil 212 includes a leading edge 218 at a forward end of the airfoil 212 and a trailing edge 220 at an aft end of the airfoil 212. The nozzle 202 may also include one or more aft hooks 222 configured to engage with an adjacent shroud (not shown) of the turbomachine, e.g., gas turbine 10. For example, the nozzle 202 may include an aft hook 222 corresponding to each airfoil 212, e.g., a doublet may have two aft hooks 222.

Each airfoil 212 includes a pressure side surface 224 and an opposing suction side surface 226. The pressure side surface 224 and the suction side surface 226 are joined together or interconnected at the leading edge 218 of the airfoil 212, which is oriented into the flow of combustion gases 30 (FIG. 1). The pressure side surface 224 and the suction side surface 226 are also joined together or interconnected at the trailing edge 220 of the airfoil 212 spaced downstream from the leading edge 218. The pressure side surface 224 and the suction side surface 226 are continuous about the leading edge 218 and the trailing edge 220. The pressure side surface 224 is generally concave, and the suction side surface 226 is generally convex.

FIG. 3 is a side view of a trailing edge portion of an airfoil 212 of a stator vane 202, with portions of the inner platform 208 and the outer platform 210 shown in section. The trailing edge portion may be the downstream half of the airfoil 212 at and around the trailing edge 220 of the airfoil 212. As may be seen in FIG. 3, the trailing edge 220 intersects the inner platform 208 at a first point 228 and forms an inner angle β with the inner platform 208 at the first point 228. As also may be seen in FIG. 3, the trailing edge 220 intersects the outer platform 210 at a second point 230 and forms an outer angle α with the outer platform 210 at the second point 230. The second point 230 may be downstream of the first point 228. In particular, the second point 230 may be downstream of a radial projection line 1000 extending along the radial direction R through the first point 228 as noted in FIG. 3.

Also, as may be seen in FIG. 3, the trailing edge 220 projection in the axial-radial direction is a curve bowed in the downstream flow direction with the outer diameter corner point 230 not upstream of the inner diameter corner point 228, e.g., downstream as illustrated in FIG. 3 or axially aligned in other embodiments. The trailing edge 220 is be orthogonal to the outer platform 210 and oblique to the inner platform 208. Accordingly, the outer angle α is 90° and the inner angle β is not equal to 90°, e.g., the inner angle β may be less than 90°.

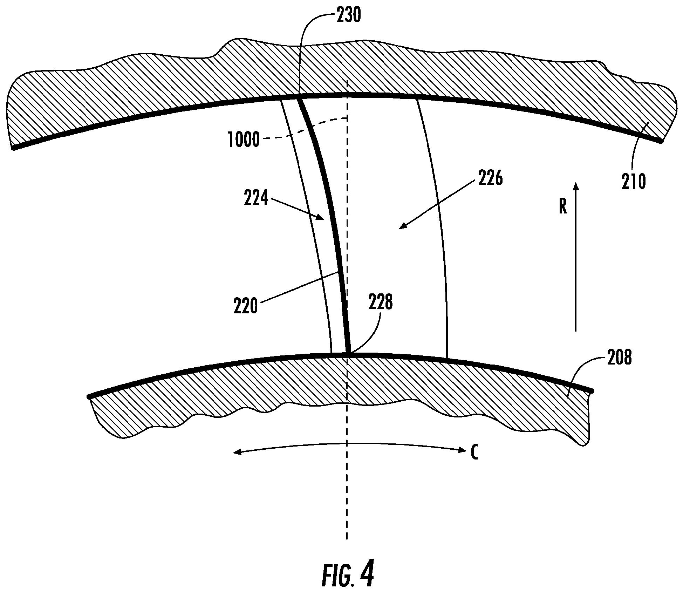

FIGS. 4 through 6 illustrate embodiments of the airfoil 212 as seen in a plane perpendicular to the axial direction A, e.g., a radial-circumferential plane defined by the radial direction R and the circumferential direction C. The direction of shaft rotation is counter-clockwise (that is, to the left in FIGS. 4 through 6.)

FIG. 4 is an end view looking upstream at the airfoil 212 of the stator vane 202, according to one or more exemplary embodiments. As may be seen for example in FIG. 4, in some embodiments, the trailing edge 220 may be curved with respect to the radial direction R, such as relative to the radial projection line 1000 extending through the intersection 228 of the trailing edge 220 with the inner platform 208, in a manner that places the pressure side 224 of every profile section angled towards the center of the engine, e.g., towards the shaft 22 and/or the axial centerline thereof, with respect to a neighboring profile section at a lower radius, e.g., closer to the inner platform 208.

In some embodiments, as illustrated in FIG. 4, the inner portion of the trailing edge 220 may be tangential to the radial direction R. The outer portion of the trailing edge 220 (e.g., the intersection 230 of the trailing edge 220 with the outer platform 210) may be circumferentially offset from the radial projection line 1000.

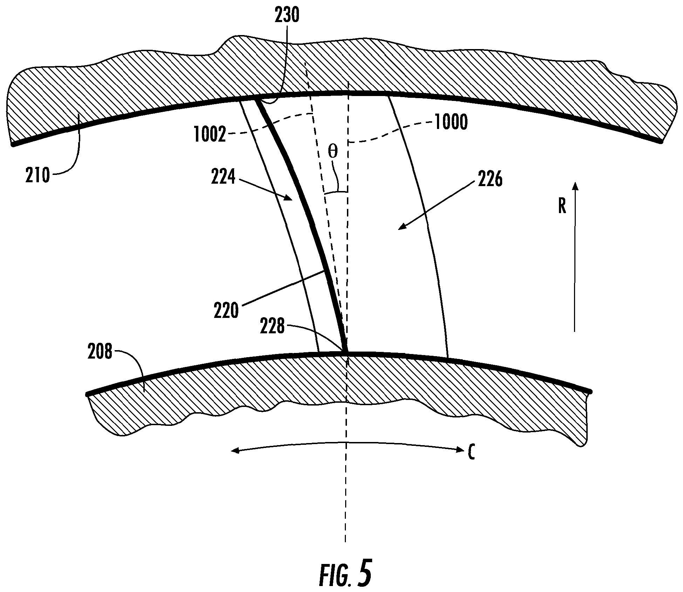

In other embodiments, as illustrated in FIG. 5, the trailing edge 220 may be tilted relative to the radial direction R. For example, the inner portion of the trailing edge 220 may be tangential to a second line 1002, which is tilted at an angle Θ with respect to the radial direction R, e.g., forming an angle Θ with the radial projection line 1000.

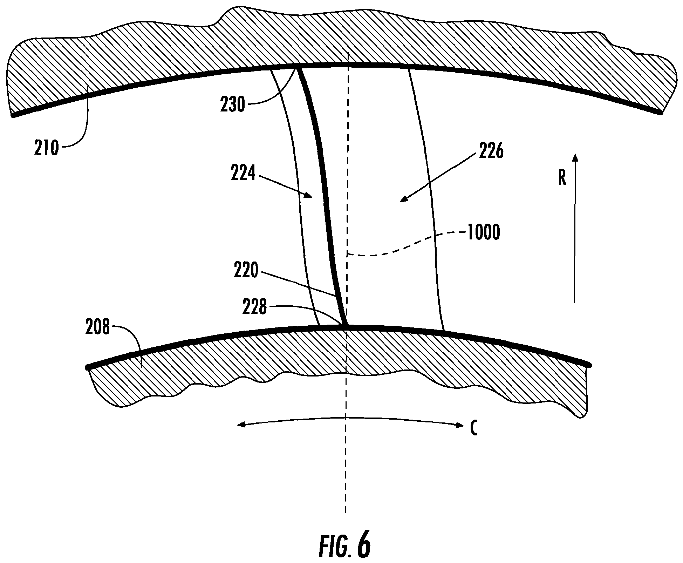

The trailing edge 220 has an S-shape, as illustrated in FIG. 6. The S-shape comprises a compound curvature, such that an outer portion of the trailing edge 220 is concave at the pressure side 224 and an inner portion of the trailing edge 200 is convex at the pressure side 224. Such embodiments may include an inflection point, e.g., a change from convex to concave, in the curvature of the trailing edge 200. In various embodiments, the inflection point may be provided at or about the midpoint of the trailing edge 220 between the inner platform 208 and the outer platform 210, or may be provided at or about one-third of the span, e.g., about one-third of the distance from the inner platform 208 to the outer platform 210.

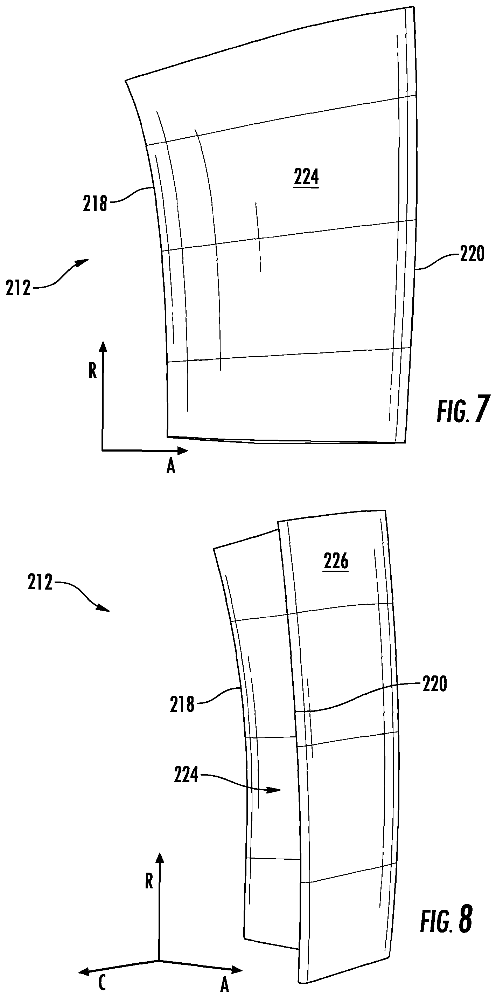

FIGS. 7 through 14 provide additional illustrations of further examples of an airfoil 212 for a stator vane 202, according to various embodiments of the present disclosure. The inner and outer platforms 208 and 210 are not depicted in FIGS. 7 through 14 for simplicity and to more clearly depict the shape of the airfoil 212.

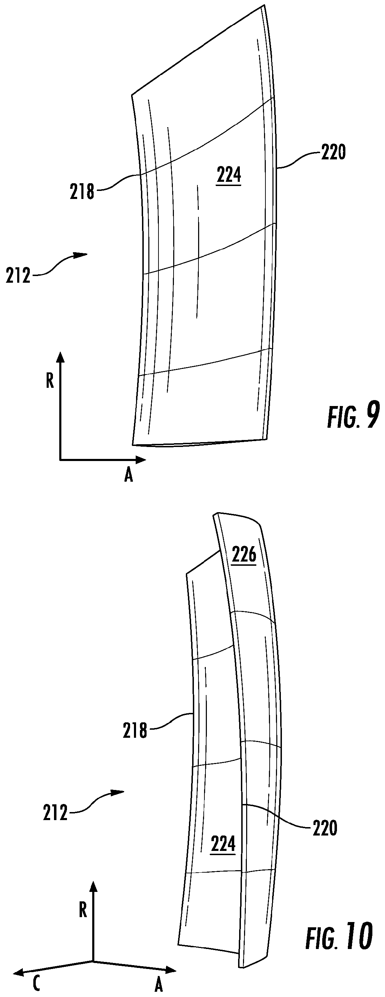

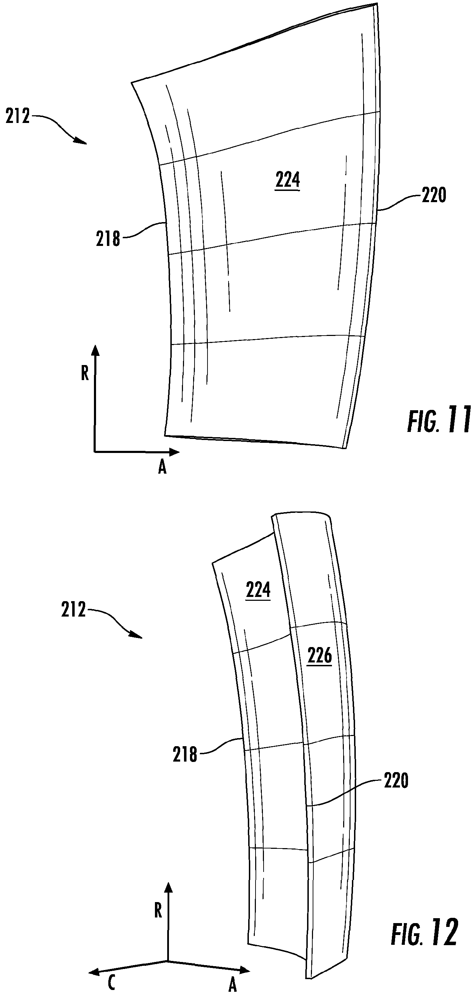

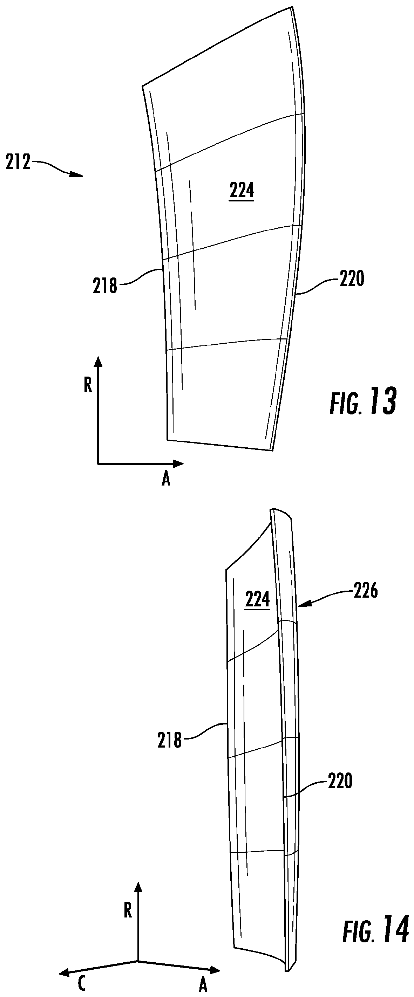

For example, FIGS. 7 and 8 illustrate an example embodiment of an airfoil 212 having a curvilinear trailing edge 220, which is radially stacked in a manner that places the pressure side 224 of every profile section angled towards the center of the engine, e.g., as described above with respect to FIG. 4. An additional example of such a radially stacked curvilinear trailing edge 220 is illustrated in FIGS. 9 and 10. The downstream bow of the trailing edge 220 curvature, e.g., as mentioned above with respect to FIG. 3, may be seen particularly in the example embodiments illustrated in FIGS. 11 and 12 and in FIGS. 13 and 14.

The various examples shown and described herein are not mutually exclusive and may be provided in various combinations. For example, in some embodiments, a turbomachine may include multiple stages of nozzles and one stage of nozzles may have airfoils 212 as illustrated in FIGS. 7 and 8, while another stage of nozzles in the same turbomachine may have airfoils 212 as illustrated in, for example, FIGS. 9 and 10, FIGS. 11 and 12, and/or in FIGS. 13 and 14.

This written description uses examples to disclose the technology, including the best mode, and also to enable any person skilled in the art to practice the technology, including making and using any devices or systems and performing any incorporated methods. The patentable scope of the technology is defined by the claims and may include other examples that occur to those skilled in the art.

## Claims

1. An airfoil (212) of a stator vane (202) for a turbomachine (10) defining an axial direction (A), the airfoil (212) extending radially between an inner platform (208) of the stator vane (202) and an outer platform (210) of the stator vane (202), the airfoil (212) comprising:
a leading edge (218) extending across the airfoil (212) from the inner platform (208) to the outer platform (210);
a trailing edge (220) downstream of the leading edge (218) along a flow direction, the trailing edge (220) extending across the airfoil (212) from an inner diameter corner point (228) to an outer diameter corner point (230) at the intersection with the outer platform (210), wherein a projection of trailing edge (220) in an axial-radial plane is a curve bowed in the downstream flow direction;
a pressure side surface (224) extending between the inner platform (208) and the outer platform (210) and extending between the leading edge (218) and the trailing edge (220); and
a suction side surface (226) extending between the inner platform (208) and the outer platform (210) and extending between the leading edge (218) and the trailing edge (220), the suction side surface (226) opposing the pressure side surface (224);
**characterized in that** the curve of the trailing edge (220) projection in the axial-radial plane is orthogonal with the outer platform (210) at the outer diameter corner point (230) and the curve of the trailing edge (220) projection in the axial-radial plane is oblique to the inner platform (208) in the axial-radial plane at the inner diameter corner point (228), with the outer diameter corner point (230) not upstream of the inner diameter corner point (228),
the inner diameter corner point (228) is positioned at the intersection with the inner platform (208),
the trailing edge (220) is curvilinear within a plane perpendicular to the axial direction (A), wherein the trailing edge (220) has an S-shape, comprising a compound curvature, such that an outer portion of the trailing edge (220) is concave at the pressure side (224) and an inner portion of the trailing edge (200) is convex at the pressure side (224).

2. The airfoil (212) of claim 1, wherein the trailing edge (200) includes an inflection point in the curvature of the trailing edge (200) where it changes from convex to concave, wherein the inflection point is provided at the midpoint of the trailing edge (220) between the inner platform (208) and the outer platform (210).

3. The airfoil (212) of claim 1, wherein the trailing edge (200) includes an inflection point in the curvature of the trailing edge (200) where it changes from convex to concave, wherein the inflection point is provided at one-third of the distance from the inner platform (208) to the outer platform (210).

4. The airfoil (212) of claim 1, wherein the curve of the trailing edge (220) projection in the axial-radial plane forms an angle of less than ninety degrees with the inner platform (208).

5. The airfoil (212) of claim 1, wherein the outer diameter corner point (230) is downstream of the inner diameter corner point (228).

6. The airfoil (212) of claim 1, wherein the trailing edge (220) is curvilinear within the plane perpendicular to the axial direction (A) in a manner that the pressure side surface (224) of the airfoil (212) is angled towards the center of the turbomachine (10).

7. The airfoil (212) of claim 1, wherein the turbomachine (10) further defines a radial direction (R) perpendicular to the axial direction (A), and wherein the inner portion of the trailing edge (220) is tangential to the radial direction (R).

8. The airfoil (212) of claim 1, wherein the turbomachine (10) further defines a radial direction (R) perpendicular to the axial direction (A), and wherein the inner portion of the trailing edge (220) is tilted relative to the radial direction (R).

9. A turbomachine (10) defining an axial direction (A), a radial direction (R) perpendicular to the axial direction (A), and a circumferential direction (C) extending concentrically around the axial direction, the turbomachine (10) comprising;
a compressor (14);
a combustor (16) disposed downstream from the compressor (14); and
a turbine (18) disposed downstream from the combustor (16), the turbine (18) including a stator vane (202) having an inner platform (208), an outer platform (210), and an airfoil (212), the airfoil of the stator vane being described in any of the preceding claims.

## Patentansprüche

1. Schaufelblatt (212) einer Statorleitschaufel (202) für eine Turbomaschine (10), die eine axiale Richtung (A) definiert, wobei sich das Schaufelblatt (212) zwischen einer inneren Plattform (208) der Statorleitschaufel (202) und einer äußeren Plattform (210) der Statorleitschaufel (202) radial erstreckt, das Schaufelblatt (212) umfassend:
eine Vorderkante (218), die sich über das Schaufelblatt (212) von der inneren Plattform (208) zu der äußeren Plattform (210) erstreckt;
eine Hinterkante (220) nachgelagert der Vorderkante (218) entlang einer Strömungsrichtung, wobei sich die Hinterkante (220) über das Schaufelblatt (212) von einem Innendurchmesser-Eckpunkt (228) zu einem Außendurchmesser-Eckpunkt (230) an dem Schnittpunkt mit der äußeren Plattform (210) erstreckt, wobei ein Vorsprung der Hinterkante (220) in einer axial-radialen Ebene eine Kurve ist, die in die nachgelagerte Strömungsrichtung gebogen ist;
eine druckseitige Oberfläche (224), die sich zwischen der inneren Plattform (208) und der äußeren Plattform (210) erstreckt und sich zwischen der Vorderkante (218) und der Hinterkante (220) erstreckt; und
eine saugseitige Oberfläche (226), die sich zwischen der inneren Plattform (208) und der äußeren Plattform (210) erstreckt und sich zwischen der Vorderkante (218) und der Hinterkante (220) erstreckt, wobei die saugseitige Oberfläche (226) der druckseitigen Oberfläche (224) gegenüberliegt;
**dadurch gekennzeichnet, dass** die Kurve des Hinterkanten(220)-Vorsprungs in der axial-radialen Ebene zu der äußeren Plattform (210) an dem Außendurchmesser-Eckpunkt (230) orthogonal ist und die Kurve des Hinterkanten(220)-Vorsprungs in der axial-radialen Ebene zu der inneren Plattform (208) in der axial-radialen Ebene an dem Innendurchmesser-Eckpunkt (228) schräg ist, wobei der Außendurchmesser-Eckpunkt (230) nicht vorgelagert des Innendurchmesser-Eckpunkts (228) ist,
der Innendurchmesser-Eckpunkt (228) an dem Schnittpunkt mit der inneren Plattform (208) positioniert ist,
die Hinterkante (220) innerhalb einer Ebene senkrecht zu der axialen Richtung (A) gekrümmt ist, wobei die Hinterkante (220) eine S-Form aufweist, umfassend eine zusammengesetzte Krümmung, derart, dass ein äußerer Abschnitt der Hinterkante (220) an der Druckseite (224) konkav und ein innerer Abschnitt der Hinterkante (200) an der Druckseite (224) konvex ist.

2. Schaufelblatt (212) nach Anspruch 1, wobei die Hinterkante (200) einen Wendepunkt in der Krümmung der Hinterkante (200) einschließt, wobei diese sich von konvex nach konkav ändert, wobei der Wendepunkt an dem Mittelpunkt der Hinterkante (220) zwischen der inneren Plattform (208) und der äußeren Plattform (210) bereitgestellt ist.

3. Schaufelblatt (212) nach Anspruch 1, wobei die Hinterkante (200) einen Wendepunkt in der Krümmung der Hinterkante (200) einschließt, wobei diese sich von konvex nach konkav ändert, wobei der Wendepunkt bei einem Drittel der Entfernung von der inneren Plattform (208) zu der äußeren Plattform (210) bereitgestellt ist.

4. Schaufelblatt (212) nach Anspruch 1, wobei die Krümmung des Hinterkanten(220)-Vorsprungs in der axial-radialen Ebene mit der inneren Plattform (208) einen Winkel von weniger als neunzig Grad ausbildet.

5. Schaufelblatt (212) nach Anspruch 1, wobei der Außendurchmesser-Eckpunkt (230) nachgelagert des Innendurchmesser-Eckpunkts (228) ist.

6. Schaufelblatt (212) nach Anspruch 1, wobei die Hinterkante (220) innerhalb der Ebene senkrecht zu der axialen Richtung (A) auf eine Weise gekrümmt ist, dass die druckseitige Oberfläche (224) des Schaufelblatts (212) zu dem Zentrum der Turbomaschine (10) abgewinkelt ist.

7. Schaufelblatt (212) nach Anspruch 1, wobei die Turbomaschine (10) ferner eine radiale Richtung (R) senkrecht zu der axialen Richtung (A) definiert, und wobei der innere Abschnitt der Hinterkante (220) zu der radialen Richtung (R) tangential ist.

8. Schaufelblatt (212) nach Anspruch 1, wobei die Turbomaschine (10) ferner eine radiale Richtung (R) senkrecht zu der axialen Richtung (A) definiert, und wobei der innere Abschnitt der Hinterkante (220) relativ zu der radialen Richtung (R) geneigt ist.

9. Turbomaschine (10), die eine axiale Richtung (A), eine radiale Richtung (R) senkrecht zu der axialen Richtung (A) und eine umfängliche Richtung (C), die sich um die axiale Richtung konzentrisch erstreckt, definiert, die Turbomaschine (10), umfassend;
einen Verdichter (14);
eine Brennkammer (16), die nachgelagert von dem Verdichter (14) angeordnet ist; und
eine Turbine (18), die nachgelagert von der Brennkammer (16) angeordnet ist, die Turbine (18) einschließlich einer Statorleitschaufel (202), die eine innere Plattform (208), eine äußeren Plattform (210) und ein Schaufelblatt (212) aufweist, wobei das Schaufelblatt der Statorleitschaufel in einem der vorstehenden Ansprüche beschrieben ist.

## Revendications

1. Profil aérodynamique (212) d'une aube de stator (202) pour une turbomachine (10) définissant une direction axiale (A), le profil aérodynamique (212) s'étendant radialement entre une plate-forme interne (208) de l'aube de stator (202) et une plate-forme externe (210) de l'aube de stator (202), le profil aérodynamique (212) comprenant :
un bord d'attaque (218) s'étendant à travers le profil aérodynamique (212) de la plate-forme interne (208) à la plate-forme externe (210) ;
un bord de fuite (220) en aval du bord d'attaque (218) le long d'une direction d'écoulement, le bord de fuite (220) s'étendant à travers le profil aérodynamique (212) d'un point d'angle de diamètre interne (228) à un point d'angle de diamètre externe (230) au niveau de l'intersection avec la plate-forme externe (210), dans lequel une projection du bord de fuite (220) dans un plan axial-radial est une courbe arquée dans la direction d'écoulement en aval ;
une surface côté pression (224) s'étendant entre la plate-forme interne (208) et la plate-forme externe (210) et s'étendant entre le bord d'attaque (218) et le bord de fuite (220) ; et
une surface côté aspiration (226) s'étendant entre la plate-forme interne (208) et la plate-forme externe (210) et s'étendant entre le bord d'attaque (218) et le bord de fuite (220), la surface côté aspiration (226) étant opposée à la surface côté pression (224) ;
**caractérisé en ce que** la courbe de la projection du bord de fuite (220) dans le plan axial-radial est orthogonale à la plate-forme externe (210) au niveau du point d'angle de diamètre externe (230) et la courbe de la projection du bord de fuite (220) dans le plan axial-radial est oblique par rapport à la plate-forme interne (208) dans le plan axial-radial au niveau du point d'angle de diamètre interne (228), le point d'angle de diamètre externe (230) n'étant pas en amont du point d'angle de diamètre interne (228),
le point d'angle de diamètre interne (228) est positionné au niveau de l'intersection avec la plate-forme interne (208),
le bord de fuite (220) est curviligne au sein d'un plan perpendiculaire à la direction axiale (A), dans lequel le bord de fuite (220) a une forme en S, comprenant une courbure composée, de telle sorte qu'une partie externe du bord de fuite (220) est concave au niveau du côté pression (224) et une partie interne du bord de fuite (200) est convexe au niveau du côté pression (224).

2. Profil aérodynamique (212) selon la revendication 1, dans lequel le bord de fuite (200) comporte un point d'inflexion dans la courbure du bord de fuite (200) où il passe de convexe à concave, dans lequel le point d'inflexion est fourni au niveau du point médian du bord de fuite (220) entre la plate-forme interne (208) et la plate-forme externe (210).

3. Profil aérodynamique (212) selon la revendication 1, dans lequel le bord de fuite (200) comporte un point d'inflexion dans la courbure du bord de fuite (200) où il passe de convexe à concave, dans lequel le point d'inflexion est situé à un tiers de la distance entre la plate-forme interne (208) et la plate-forme externe (210).

4. Profil aérodynamique (212) selon la revendication 1, dans lequel la courbe de la projection du bord de fuite (220) dans le plan axial-radial forme un angle inférieur à quatre-vingt-dix degrés avec la plate-forme interne (208).

5. Profil aérodynamique (212) selon la revendication 1, dans lequel le point d'angle de diamètre externe (230) est en aval du point d'angle de diamètre interne (228).

6. Profil aérodynamique (212) selon la revendication 1, dans lequel le bord de fuite (220) est curviligne au sein du plan perpendiculaire à la direction axiale (A) de manière à ce que la surface côté pression (224) du profil aérodynamique (212) soit angulaire vers le centre de la turbomachine (10).

7. Profil aérodynamique (212) selon la revendication 1, dans lequel la turbomachine (10) définit en outre une direction radiale (R) perpendiculaire à la direction axiale (A), et dans lequel la partie interne du bord de fuite (220) est tangentielle à la direction radiale (R).

8. Profil aérodynamique (212) selon la revendication 1, dans lequel la turbomachine (10) définit en outre une direction radiale (R) perpendiculaire à la direction axiale (A), et dans lequel la partie interne du bord de fuite (220) est inclinée par rapport à la direction radiale (R).

9. Turbomachine (10) définissant une direction axiale (A), une direction radiale (R) perpendiculaire à la direction axiale (A), et une direction circonférentielle (C) s'étendant de manière concentrique autour de la direction axiale, la turbomachine (10) comprenant ;
un compresseur (14) ;
une chambre de combustion (16) disposée en aval du compresseur (14) ; et
une turbine (18) disposée en aval de la chambre de combustion (16), la turbine (18) comportant une aube de stator (202) ayant une plate-forme interne (208), une plate-forme externe (210) et un profil aérodynamique (212), le profil aérodynamique de l'aube de stator étant décrit dans l'une quelconque des revendications précédentes.
